Europäisches Patentamt

European Patent Office

Office européen des brevets

(19)

(11) Veröffentlichungsnummer: **0 304 128 B1**

# EUROPÄISCHE PATENTSCHRIFT

(45) Veröffentlichungstag der Patentschrift: **11.11.92**

(21) Anmeldenummer: **88201745.2**

(22) Anmeldetag: **16.08.88**

(51) Int. Cl.⁵: **C04B 35/48**, C04B 35/49, C01G 1/02

(54) **Verfahren zur Herstellung von keramischen Pulvern mit Perowskitstruktur.**

(30) Priorität: **17.08.87 DE 3727396**

(43) Veröffentlichungstag der Anmeldung:
**22.02.89 Patentblatt 89/08**

(45) Bekanntmachung des Hinweises auf die
Patenterteilung:
**11.11.92 Patentblatt 92/46**

(84) Benannte Vertragsstaaten:
**BE DE FR GB NL**

(56) Entgegenhaltungen:
**DE-A- 3 526 674**

(73) Patentinhaber: **Philips Patentverwaltung GmbH**
**Wendenstrasse 35 Postfach 10 51 49**
**W-2000 Hamburg 1(DE)**

(84) Benannte Vertragsstaaten:
**DE**

(73) Patentinhaber: **N.V. Philips' Gloeilampenfabrieken**
**Groenewoudseweg 1**
**NL-5621 BA Eindhoven(NL)**

(84) Benannte Vertragsstaaten:

**BE FR GB NL**

(72) Erfinder: **Brand, Wolfgang**
**Schlossparkstrasse 43**
**W-5100 Aachen(DE)**
Erfinder: **Hennings, Detlev, Dr.**
**Hangstrasse 28**
**W-5100 Aachen(DE)**
Erfinder: **Klee, Mareike, Dr.**
**Randeratherweg 27**
**W-5142 Hückelhoven Brachelen(DE)**
Erfinder: **Schreinemacher, Herbert**
**Sittarderstrasse 53**
**W-5100 Aachen(DE)**

(74) Vertreter: **Kupfermann, Fritz-Joachim,**
**Dipl.-Ing. et al**
**Philips Patentverwaltung GmbH Wendenstrasse 35 Postfach 10 51 49**
**W-2000 Hamburg 1(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 304 128 B1

## Beschreibung

Die Erfindung betrifft ein Verfahren zur Herstellung von keramischen Pulvern mit Perowskitstruktur durch eine hydrothermale Reaktion, wobei eine homogene wässerige, mindestens ein Erdalkalimetallsalz und mindestens ein Zirkoniumsalz und/oder ein Titansalz enthaltende Lösung mit einer Base umgesetzt und am Reaktionsprodukt haftendes Wasser entfernt wird.

Keramische Pulver mit Perowskitstruktur sind ein wichtiger Ausgangsstoff zur Erstellung unterschiedlichster elektronischer Bauelemente wie z.B. Vielschichtkondensatorenoder auch nichtlineare Widerstände mit positiver Temperaturcharakteristik. Das Erfordernis der ständig steigenden Verbesserung der elektronischen Bauelemente sowie eine bessere Prozeßbeherrschung bei der Herstellung dieser Bauelemente stellt erhöhte Anforderungen an die Ausgangsstoffe.

Perowskitverbindungen wie z.B. BaTiO$_3$-Pulver werden heute industriell noch weitgehend nach dem mixed-oxide-Verfahren erstellt: Bariumcarbonat und Titandioxid werden in Mühlen gemischt und in einer Festkörperreaktion bei einer Temperatur $\geq$ 1000 °C zu BaTiO$_3$ umgesetzt. Nachteilig ist hierbei, daß hohe Reaktionstemperaturen und Mahlprozesse notwendig sind. Durch das Calcinieren bei Temperaturen von etwa 1000 °C und höher findet eine Aggregation der Pulverpartikel statt, so daß grobkörnige Pulver erhalten werden. Diese müssen durch Mahlprozesse zerkleinert werden.

Es ist jedoch sehr schwierig, Partikelgrößen von < 1 $\mu$m zu erreichen. Aufgrund der Aggregation der Partikel wird eine unerwünscht breite Korngrößenverteilung erhalten. Die Mahlprozesse bringen außerdem Verunreinigungen durch Abrieb in das Pulver.

Aus DE-OS 35 26 674 ist ein Verfahren zur Herstellung einer Perowskit-Verbindungen enthaltenden Masse bekannt, bei dem Perowskit = Verbindungen der allgemeinen Formel ABO$_3$, z.B. BaTiO$_3$, eingesetzt werden, die durch hydrothermale Reaktionen, wie nachstehend unter A bis E beschrieben, hergestellt werden:

A. Reaktion einer Mischung eines ein A-Gruppenelement enthaltenden Alkoxids mit einem B-Gruppenelement enthaltenden Alkoxid mit Wasser bei einer Temperatur von etwa 80 °C und anschließende Umsetzung bei Reaktionstemperaturen von 150 °C.

B. Reaktion eines das A-Gruppenelement enthaltenden Hydroxids mit einem das B-Gruppenelement enthaltenden Alkoxid entsprechend A.

C. Reaktion eines das A-Gruppenelement enthaltenden Hydroxids mit einem das B-Gruppenelement enthaltenden Hydroxid wie unter A beschrieben.

D. Reaktion eines das A-Gruppenelement enthaltenden Hydroxids mit einem das B-Gruppenelement enthaltenden Salz entsprechend A.

E. Eine Mischung, welche das A-Gruppenelement und das B-Gruppenelement als Salz enthält, wird mit Alkalihydroxiden umgesetzt, wobei die unter A beschriebenen Bedingungen eingesetzt werden.

In den Reaktionen gemäß A und B werden stark Hydrolyseempfindliche Alkoxide eingesetzt; dies hat den Nachteil, daß die Aufbewahrung und die Präparation unter einer Inertgasatmosphäre unter Ausschluß von H$_2$O, O$_2$ und CO$_2$ erfolgen muß. Damit ist dieser Prozeß relativ kostenaufwendig. Die Reaktionen gemäß B und C haben den zusätzlichen Nachteil, daß die Ausgangsstoffe nicht in einer homogenen Lösung zur Reaktion gebracht werden, wodurch Inhomogenitäten im Endprodukt erzeugt werden können.

Die Reaktion gemäß E hat den gravierenden Nachteil, daß Alkaliverbindungen für die Reaktion erforderlich sind. Es hat sich gezeigt, daß die elektrischen Eigenschaften von auf diese Weise hergestellten keramischen Pulvern nicht allen Anforderungen genügen.

Der Erfindung liegt die Aufgabe zugrunde, das eingangs genannte Verfahren zur Herstellung von keramischen Pulvern mit Perowskitstruktur präparativ weniger aufwendig und damit kostengünstiger zu gestalten, wobei insbesondere feinteilige, hochreine, nicht mit Alkaliionen verunreinigte Pulverpartikel mit runder Partikelform und in enger Korngrößenverteilung hergestellt werden sollen.

Diese Aufgabe wird durch ein Verfahren gelöst, wie es Gegenstand des unabhängigen Anspruch 1 ist.

Die mit der Erfindung erzielten Vorteile bestehen insbesondere darin, daß hohe Reaktionstemperaturen und Mahlprozesse umgangen werden, die eine Aggregation der Pulverpartikel bewirken und überdies Verunreinigungen in das Pulver einbringen. Ein weiterer Vorteil besteht darin, daß die Ausgangskomponenten in einer homogenen Lösung zur Reaktion gebracht werden. Dies sind ideale Bedingungen zur Erstellung eines homogenen Pulvers.

Ein weiterer Vorteil des erfindungsgemäßen Verfahrens ist, daß die Bildung von extrem feinteiligem Pulver (mittlere Partikelgröße 0,03 $\mu$m) bei sehr niedrigen Reaktionstemperaturen (80 °C) möglich ist. Die Umsetzung in wässeriger Lösung bei einer Temperatur von z.B. 80 °C ermöglicht es, unter Normaldruck zu arbeiten. Durch Variation der Verfahrensparameter, wie z.B. Erhöhung der Reaktionstemperatur und Aufbau eines Drucks in einem Druckgefäß kann die Partikelgröße reproduzierbar auf Werte bis $\approx$ 0,2 $\mu$m eingestellt werden. Mit dem erfindungsgemäßen Verfahren ist es möglich, nicht nur Erdalkalimettal-Titanate oder Erdalkalimetall-Zirkonate sondern auch feste Lösungen mit Perowskitstruktur wie z.B. $(Ba,Sr)TiO_3$ oder $Ba(Ti,Ze)O_3$ zu erstellen. Diese Materialen haben neben reinem $BaTiO_3$ eine erhebliche Bedeutung zur Herstellung dielektrischer Massen. Es ist z.B. auch möglich, einen Teil des Erdalkalimetallgehaltes durch Blei zu ersetzen. Derartige Perowskite können bevorzugt bei der Herstellung nicht-linearer Widerstände mit positiver Temperaturcharakteristik bei insbesondere höheren Temperaturen eingesetzt werden.

Das erfindungsgemäße Verfahren hat den weiteren Vorteil, daß keine teuren Alkoxide als Ausgangsstoffe verwendet werden. Die im vorliegenden Verfahren eingesetzten Verbindungen müssen nicht unter einer Inertgasatmosphäre aufbewahrt und umgesetzt werden, wodurch die Rohstoffe und der Prozeß kostengünstiger und weniger aufwendig sind als z.B. das aus DE-OS 35 26 674 (Reaktionen A und D) bekannte Verfahren.

Da im vorliegenden Verfahren im Gegensatz zu dem aus DE-OS 35 26 674 bekannten Verfahren (Reaktionen C und D) anstelle von Bariumhydroxid Bariumhalogenide ($BaCl_2$) zum Einsatz kommen, kann eine Reinigung der Hydroxide von Bariumcarbonat gespart werden, was die Prozeßkosten verringert.

Ein Vorteil des vorliegenden Verfahrens ist, daß zur Reaktion der Ausgangsstoffe starke organische Basen, bevorzugt Amine, wie Tetramethylammoniumhydroxid $(CH_3)_4 N-OH$, eingesetzt werden. Dadurch werden Verunreinigungen des gewonnenen keramischen Pulvers mit Alkaliionen verhindert.

Anhand der Zeichnung werden Ausführungsbeispiele der Erfindung beschrieben und in ihrer Wirkungsweise erläutert.

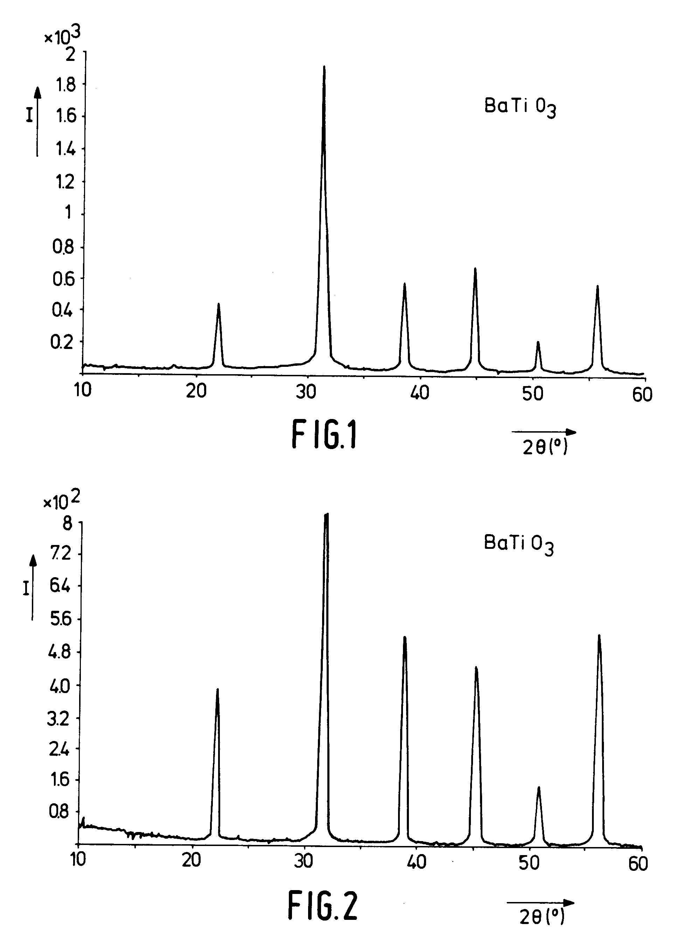

Die Figuren 1 bis 5 zeigen Röntgenbeugungsdiagramme (Intensität der Röntgenbeugung I als Funktion des Beugungswinkels $2\theta$ in Grad) von nach dem vorliegenden Verfahren hergestellten Pulvern mit Perowskitstruktur.

Gemäß den nachfolgenden Beispielen 1 bis 4 werden Pulver mit Perowskitstruktur auf folgende Weise hergestellt:

Beispiel 1

10,05 g einer 18,88 Gew.% $TiO_2$ enthaltenden wässerigen Titanoxichloridlösung werden mit 11,544 g $BaCl_2.2H_2O$ in einen Dreihalskolben aus Quarzglas eingewogen. Es werden bei Raumtemperatur 50 ml $CO_2$-freies Wasser hinzugefügt, um das Bariumchlorid vollständig aufzulösen. In die homogene Lösung werden unter kräftigem Rühren 68,6 g einer wässerigen, 25 Gew.% Tetramethylammoniumhydroxid enthaltenden Lösung innerhalb von einer Stunde eingetropft. Die erhaltene Suspension wird auf eine Temperatur von 80 °C erwärmt und über eine Dauer von 138 Stunden unter Rühren bei dieser Temperatur reagieren gelassen. Das Reaktionsprodukt wird zur Entfernung von Chlorionen, überschüssiger Bariumionen wie auch von Tetramethylammoniumionen dreimal mit 100 ml $CO_2$-freiem siedendem Wasser, zweimal mit 25 ml 0,1 M wässeriger Essigsäure und viermal mit $CO_2$-freiem Wasser gewaschen, wonach das Wasser dekantiert wird. An der Pulveroberfläche haftendes Wasser wird durch Waschen mit Äthanol entfernt.

Das Röntgenbeugungsdiagramm gemäß Figur 1 zeigt, daß keine weiteren Phasen außer $BaTiO_3$ vorhanden sind. Die mittlere Partikelgröße beträgt 0,046 $\mu$m, wie aus rastermikroskopischen Aufnahmen ermittelt wurde. Infolge der kleinen Partikelgröße ist die Struktur des erhaltenen $BaTiO_3$-Pulvers kubisch oder pseudokubisch.

Beispiel 2

2,00 g einer 18,88 Gew.% $TiO_2$ enthaltenden wässerigen Titanoxichloridlösung werden mit 2,31 g $BaCl_2.2H_2O$ in einen Kolben aus Qaurglas eingewogen. Es werden bei Raumtemperatur 10 ml $CO_2$-freies Wasser unter Rühren hinzugefügt, um das Bariumchlorid vollständig zu lösen. Innerhalb von 15 min werden zu dieser homogenen Lösung 13,76 g einer wässerigen, 25 Gew.% Tetramethylammoniumhydroxid enthaltenden Lösung unter starkem Rühren zugetropft. Die erhaltene Suspension wird in einem Aufschlußgefäß bei einer Temperatur von 150 °C umgesetzt. Nach einer Reaktionszeit von 100 Stunden wird die flüssige Phase dekantiert und das Reaktionsprodukt sechsmal mit 50 ml $CO_2$-freiem siedendem Wasser gewaschen. Anschließend wird das Reaktionsprodukt mit 10 ml einer 0,1 M wässerigen Essigsäure und viermal mit 50 ml siedendem $CO_2$-freiem Wasser gewaschen, wonach das Wasser dekantiert wird. An der Oberfläche des Reaktionsproduktes haftendes Wasser wird durch Waschen mit 30 ml Äthanol entfernt.

Das Röntgenbeugungsdiagramm gemäß Figur 2 zeigt keine weiteren Phasen außer $BaTiO_3$. Die mittlere Partikelgröße beträgt 0,11 $\mu$m. Die Struktur der erhaltenen $BaTiO_3$-Pulver ist hier ebenfalls kubisch oder pseudokubisch.

Beispiel 3

2,4290 g einer 18,88 gew.% $TiO_2$ enthaltenden wässerigen Titanoxichloridlösung, 0,4107 g $ZrOCl_2.6H_2O$ und 1,7526 g $BaCl_2.2H_2O$ werden bei Raumtemperatur in 10 ml $CO_2$-freiem Wasser gelöst. Innerhalb von 15 min werden zu dieser homogenen Lösung 14,659 g einer wässerigen, 25 Gew.% Tetramethylammoniumhydroxid enthaltenden Lösung unter starkem Rühren zugetropft. Die erhaltene Suspension wird in einem Aufschlußgefäß bei einer Temperatur von 150 °C umgesetzt.

Nach einer Reaktionszeit von 24 Stunden wird die flüssige Phase vom Reaktionsprodukt getrennt und das Reaktionsprodukt wird sechsmal mit 50 ml $CO_2$-freiem siedendem Wasser gewaschen, wonach das Wasser dekantiert wird. An der Oberfläche des Reaktionsproduktes haftendes Wasser wird durch Trocknen im Trochenschrank bei einer Temperatur von 100 °C entfernt.

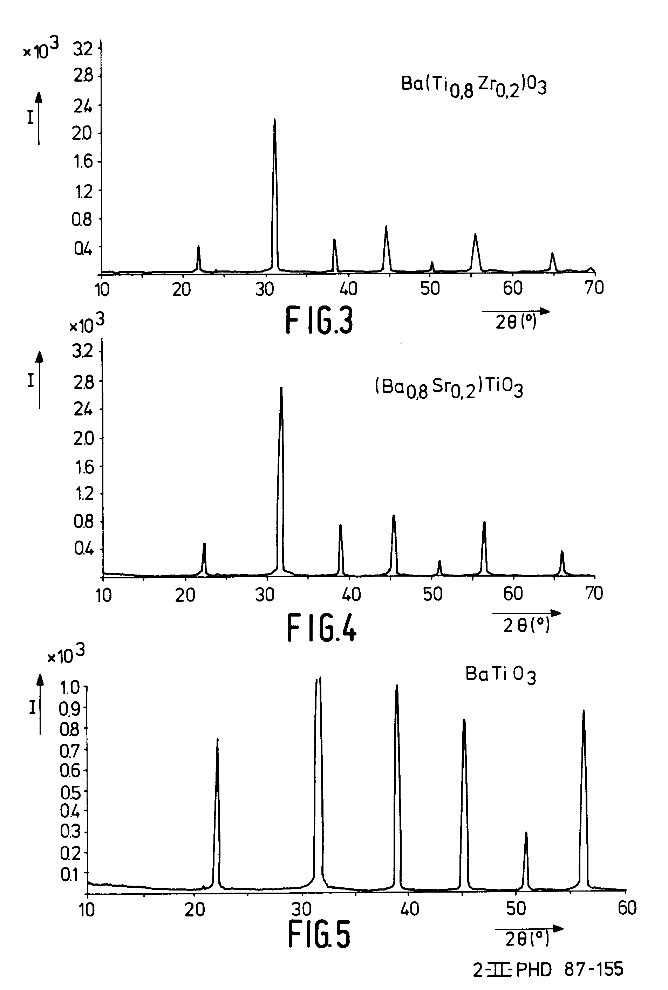

Wie dem Röntgenbeugungsdiagramm gemäß Figur 3 zu entnehmen ist, weist das erhaltene Pulver kubische bis pseudokubische Perowskitstruktur auf. Die Bildung einer festen Lösung $Ba(Ti_{0,8}Zr_{0,2})O_3$ als einziger Phase kann der Gitterkonstanten entnommen werden. Durch den Einbau des größeren Zirkons auf die Gitterplätze des Titans im $BaTiO_3$-Gitter beobachtet man eine Aufweitung der kubischen $BaTiO_3$-Gitterzelle. Es wurde eine kubische Gitterkonstante von a = 4,052 bestimmt.

## Beispiel 4

2,5816 g einer 18,88 Gew.% $TiO_2$-enthaltenden wässerigen Titanoxichloridlösung, 1,1921 g $BaCl_2 \cdot 2H_2O$ und 0,3253 g $SrCl_2 \cdot 6H_2O$ werden bei Raumtemperatur in 9 ml $CO_2$-freiem Wasser gelöst. Innerhalb von 15 min werden zu dieser homogenen Lösung 13,323 g einer wässerigen, 25 Gew.% Tetramethylammoniumhydroxid enthaltenden Lösung unter starkem Rühren zugetropft. Die erhaltene Suspension wird in einem Aufschlußgefäß bei einer Temperatur von 150 °C umgesetzt. Nach einer Reaktionszeit von 24 Stunden wird die flüssige Phase dekantiert und das Reaktionsprodukt sechsmal mit 50 ml $CO_2$-freiem siedendem Wasser gewaschen, wonach das Wasser dekantiert wird. Das Reaktionsprodukt wird im Trockenschrank bei einer Temperatur von 100 °C getrocknet.

Wie dem Röntgenbeugungsdiagramm gemäß Figur 4 zu entnehmen ist, weist das erhaltene Pulver kubische bis pseudokubische Perowskitstruktur auf. Die Bildung einer festen Lösung $Ba_{0,8}Sr_{0,2}TiO_3$ als einziger Phase kann der Gitterkonstanten entnommen werden.

Durch den Einbau des kleineren Strontiums auf den Gitterplätzen des Bariums beobachtet man eine Verkleinerung der $BaTiO_3$-Gitterzelle. Es wurde eine kubische Gitterkonstante von a = 3,998 bestimmt.

In den oben beschriebenen Beispielen 1 bis 4 wurde zur Erhöhung der $BaTiO_3$-Ausbeute bzw. der Herstellung einer stöchiometrischen Phase mit einem atomaren Verhältnis Ba:Ti = 1:1 mit einem 50 bis 100%igen Ba-Überschuß in der Reaktion gearbeitet.

Mit dem nachfolgenden Beispiel 5 wird eine

Methode beschrieben, wie $BaTiO_3$ ohne Ba-Überschuß und ohne Chlorionen mit einem Ba:Ti-Verhältnis > 0,98 bei einer Temperatur im Bereich von 110 - 180 °C in einer hydrothermalen Reaktion hergestellt werden kann. Hierzu werden Barium-Titan-Acetat-Gele mit einem atomaren Verhältnis Ba:Ti = 1:1 in dem stark alkalischen Medium einer wässerigen Tetramethylammoniumhydroxid-Lösung zu $BaTiO_3$ umgesetzt. Die Verwendung von Bariumacetat hat den Vorteil, daß Chlorionen, die sich erfahrungsgemäß in geringen Mengen auf den Plätzen der Sauerstoffionen ins Perowskitgitter einbauen und dort schon in Mengen von 100 ppm als Donatoren das elektrische Isolationsvermögen von aus solchen Pulvern hergestellter Keramik verringern können, ausgeschaltet werden.

Der Vorteil der Verwendung von Acetat-Gelen liegt außerdem darin, daß die Barium- und Titanionen in dem Gel quasi fixiert sind und auf sehr kurze Distanz miteinander reagieren können. Barium- und Titan-Acetat werden in essigsaurer wässeriger Lösung homogen vermischt.

Die klare homogene Mischung geliert abhängig vom Essigsäuregehalt von selbst typischerweise nach einer Dauer von 8 bis 9 Stunden. Es entstehen klare transparente Gele, die eine homogene Verteilung von Barium- und Titanionen enthalten. Selbst wenn in atomaren Dimensionen eine gewisse Entmischung von Barium- und Titanionen vorliegen sollte, so kann die Mischung noch immer als quasi homogen bezeichnet werden. Bei Erhitzung des Gels in alkalischem Milieu entsteht $BaTiO_3$ mit einem Ba:Ti-Verhältnis > 0,98.

## Beispiel 5

### 1. Herstellung des Gels:

50 g Tetrabutyltitanat $Ti(OC_4H_9)_4$ werden mit 26,5 g Essigsäure $CH_3COOH$ vermischt. Der Titangehalt der entstandenen Lösung wird gravimetrisch als $TiO_2$ bestimmt. In 10 g der Lösung sind 1,534 g $TiO_2$ (entsprechend 0,0192 Mol Ti) enthalten.

4,981 g Barium-Acetat $Ba(CH_3COO)_2$ werden in 6,7 g Wasser und 4,69 g Essigsäure $CH_3COOH$ in der Wärme gelöst. Nach dem Abkühlen auf Raumtemperatur wird die Barium-Acetat-Lösung mit 10,152 g der Titan-Acetat-Lösung gemischt.

Das atomare Verhältnis Ba:Ti beträgt in der Barium-Titan-Acetat-Lösung etwa 1:1. Nach einer Dauer von 8 bis 9 Stunden bei Raumtemperatur hat sich die Barium-Titan-Acetat-Lösung in ein transparentes, schlierenfreies, gelbliches Gel umgewandelt. Der $BaTiO_3$-Gehalt eines solchen Gels beträgt nach Calcinieren bei einer Temperatur von ≈ 1000 °C 0,172 g pro 1 g Gel.

### 2. Herstellung von $BaTiO_3$ aus dem Gel:

5,9 Gel werden mit 25 g einer wässerigen Lösung von 6,25 Tetramethylammoniumhydroxid $(CH_3)_4N$-OH (entspricht 25 Gew.% Tetramethylammoniumhydroxid) in ein verschließbares Gefäß aus einem inerten Kunststoff gefüllt, das in einen Stahlbehälter unter Druck eingesetzt wird.

Die Anordnung entspricht einer handelsüblichen Vorrichtung zum Aufschließen schwerlöslicher Verbindungen bei erhöhten Temperaturen für die chemische Analyse.

Das Gel wird über eine Dauer von 17 Stunden bei einer Temperatur von 150 °C und einem Überdruck von etwa 5 bar erhitzt. Nach Beendigung der Reaktion und Abkühlen des Reaktionsgemisches wird die Flüssigkeit aus dem Kunststoffgefäß dekantiert und der Niederschlag mit heißem (70 °C) Wasser und schließlich mit vergälltem Äthanol gewaschen. Nach dem Trocknen ergibt sich mit 98%iger Ausbeute ein sehr feinkörniges $BaTiO_3$ einer mittleren Partikelgröße von 0,1 $\mu$m.

Das Röntgenbeugungsdiagramm gemäß Figur 5 zeigt keine weiteren Phasen außer $BaTiO_3$. Entsprechend der geringen Partikelgröße zeigt das erhaltene $BaTiO_3$-Pulver kubische bis pseudokubische Struktur.

Beispiel 6

Herstellung von $(Ba_{0,5}Pb_{0,5})TiO_3$.

1. Herstellung des Gels:

50 g Tetrabutyltitanat $Ti(OC_4H_9)_4$ werden mit 26,5 g Essigsäure $CH_3COOH$ vermischt. Der Titangehalt der entstandenen Lösung wird gravimetrisch als $TiO_2$ bestimmt. In 10 g der Lösung sind 1,534 g $TiO_2$ (entsprechend 0,0192 Mol Ti) enthalten.

2,491 g Barium-Acetat $Ba(CH_3COO)_2$ und 3,698 g Blei-Acetat $Pb(CH_3COO)_2.3H_2O$ werden in 7,5 g Wasser und 4,69 g Essigsäure $CH_3COOH$ in der Wärme gelöst. Nach dem Abkühlen auf Raumtemperatur wird die Barium-Blei-Acetat-Lösung mit 10,152 g der Titan-Acetat-Lösung gemischt.

Das atomare Verhältnis (Ba,Pb):Ti beträgt in der Barium-Blei-Titan-Acetat-Lösung etwa 1:1. Nach einer Dauer von 8 bis 9 Stunden bei Raumtemperatur hat sich die Barium-Blei-Titan-Acetat-Lösung in ein transparentes, schlierenfreies, gelbliches Gel umgewandelt. Der $(Ba,Pb)TiO_3$-Gehalt eines solchen Gels beträgt nach Calcinieren bei einer Temperatur von 1000 °C 0,2 g pro 1 g Gel.

2. Herstellung von $Ba_{0,5}Pb_{0,5})TiO_3$ aus dem Gel:

6,8 g Gel werden mit 25 g einer wässerigen Lösung von 6,25 g Tetramethylammoniumhydroxid $(CH_3)_4N$-OH (entspricht 25 Gew.% Tetramethylammoniumhydroxid) in ein verschließbares Gefäß aus einem inerten Kunststoff gefüllt, das in einen Stahlbehälter unter Druck eingesetzt wird.

Die Anordnung entspricht einer handelsüblichen Vorrichtung zum Aufschließen schwerlöslicher Verbindungen bei erhöhten Temperaturen für die chemische Analyse.

Das Gel wird über eine Dauer von 17 Stunden bei einer Temperatur von 150 °C und einem Überdruck von etwa 5 bar erhitzt. Nach Beendigung der Reaktion und Abkühlen des Reaktionsgemisches wird die Flüssigkeit aus dem Kunststoffgefäß dekantiert und der Niederschlag mit heißen (70 °C) Wasser und schließlich mit vergälltem Äthanol gewaschen. Nach dem Trocknen ergibt sich mit 98%iger Ausbeute ein sehr feinkörniges $(Ba_{0,5}Pb_{0,5})TiO_3$ einer mittleren Partikelgröße von 0,1 $\mu$m.

Das Röntgenbeugungsdiagramm zeigt außer einer tetragonalen Perowskitphase keine weiteren Phasen.

**Patentansprüche**

1. Verfahren zur Herstellung von keramischen Pulvern mit Perowskitstruktur durch eine hydrothermale Reaktion, wobei eine homogene wässerige, mindestens ein Erdalkalimetallsalz und mindestens ein Zirkoniumsalz und/oder ein Titansalz enthaltende Lösung oder ein Erdalkalimetall-Titan-Acetat-Gel mit einer Base umgesetzt und am Reaktionsprodukt haftendes Wasser entfernt wird, wobei als Base eine starke organische Base eingesetzt wird und wobei eine Reaktionstemperatur im Bereich von 70 bis 150°C, im Falle der Umsetzung eines Erdalkalimetall-Titan-Acetat-Gels von 110-180°C eingehalten wird.

2. Verfahren nach Anspruch 1,
dadurch gekennzeichnet,
daß als Erdalkalimetallsalz Bariumdichlorid $BaCl_2$ eingesetzt wird.

3. Verfahren nach Anspruch 1,
dadurch gekennzeichnet,
daß als Erdalkalimetallsalz Strontiumdichlorid $SrCl_2$ eingesetzt wird.

4. Verfahren nach mindestens einem der vorhergehenden Ansprüche,
dadurch gekennzeichnet,
daß als Titansalz Titanoxichlorid $TiOCl_2$ eingesetzt wird.

5. Verfahren nach mindestens einem der vorhergehenden Ansprüche,
dadurch gekennzeichnet,
daß als Zirkoniumsalz Zirkoniumoxichlorid

ZrOCl$_2$ eingesetzt wird.

6.  Verfahren nach Anspruch 1,
dadurch gekennzeichnet,
daß als Erdalkalimetall-Titan-Acetat-Gel
Barium-Titan-Acetat-Gel eingesetzt wird.

7.  Verfahren nach mindestens einem der Ansprüche 1 bis 6,
dadurch gekennzeichnet,
daß als organische Base Amine eingesetzt
werden.

8.  Verfahren nach Anspruch 7,
dadurch gekennzeichnet,
daß als organische Base Tetramethylammoniumhydroxid (CH$_3$)$_4$ N-OH eingesetzt wird.

9.  Verfahren nach mindestens einem der Ansprüche 1 bis 8,
dadurch gekennzeichnet,
daß ein Teil der Erdalkalimetall-Verbindungen
durch eine wasserlösliche Bleiverbindung substituiert ist.

10.  Verfahren nach Anspruch 9,
dadurch gekennzeichnet,
daß bis zu 80 Mol% des Erdalkalimetalls durch
Blei substituiert sind.

## Claims

1.  A method of manufacturing ceramic powders
having the perovskite structure by means of a
hydrothermal reaction, in which method a
homogeneous aqueous solution comprising at
least one alkaline earth metal salt and at least
one zirconium salt and/or one titanium salt, or
an alkaline earth metal-titanium-acetate-gel, is
caused to react with a base and water adhering to the reaction product is removed, in
which method a strong organic base is used
and the reaction temperature ranges from
70°C to 150°C or, if an alkaline earth metal-titanium-acetate-gel us used, from 110°C to
180°C.

2.  A method as claimed in Claim 1, characterized
in that barium dichloride BaCl$_2$ is used as the
alkaline earth metal salt.

3.  A method as claimed in Claim 1, characterized
in that strontium dichloride SrCl$_2$ is used as
the alkaline earth metal salt.

4.  A method as claimed in at least one of the
preceding Claims, characterized in that

titanium oxychloride TiOCl$_2$ is used as the
titanium salt.

5.  A method as claimed in at least one of the
preceding Claims, characterized in that xirconium oxychloride ZrOCl$_2$ is used as the zirconium salt.

6.  A method as claimed in Claim 1, characterized
in that barium-titanium-acetate gel is used as
the alkaline-earth metal-titanium-acetate gel.

7.  A method as claimed in at least one of the
Claims 1 to 6, characterized in that amines are
used as the organic base.

8.  A method as claimed in Claim 7, characterized
in that tetramethyl ammonium hydroxyde
(CH$_3$)$_4$ N-OH is used as the organic base.

9.  A method as claimed in at least one of the
Claims 1 to 8, characterized in that the alkaline
earth metal compounds are partially substituted by a water-soluble lead compound.

10.  A method as claimed in Claim 9, characterized
in that up to 80 mol% of the alkaline-earth
metal is substituted by lead.

## Revendications

1.  Procédé de production de poudres céramiques
ayant une structure de pérovskite par une
réaction hydrothermale, suivant lequel une solution aqueuse homogène contenant au moins
un sel de métal alcalino-terreux et au moins un
sel de zirconium et/ou un sel de titane ou un
gel d'acétate de métal alcalino-terreux et de
titane est mis à réagir avec une base et l'au
adhérant au produit de réaction est éliminée,
dans lequel une base organique forte est utilisée comme base et une température de réaction de 70 à 150°C ou, dans le cas de la
réaction d'un gel d'acétate de métal alcalino-terreux et de titane, de 110 à 180°C est
entretenue.

2.  Procédé suivant la revendication 1, caractérisé
en ce que le dichlorure de baryum BaCl$_2$ est
utilisé comme sel de métal alcalino-terreux.

3.  Procédé suivant la revendication 1, caractérisé
en ce que le dichlorure de strontium SrCl$_2$ est
utilisé comme sel de métal alcalino-terreux.

4.  Procédé suivant au moins l'une des revendications précédentes, caractérisé en ce que
l'oxychlorure de titane TiOCl$_2$ est utilisé com-

me sel de titane.

5. Procédé suivant au moins l'une des revendications précédentes, caractérisé en ce que l'oxychlorure de zirconium est utilisé comme sel de zirconium.

6. Procédé suivant la revendication 1, caractérisé en ce qu'un gel d'acétate de baryum et de titane est utilisé comme gel d'acétate de métal alcalino-terreux et de titane.

7. Procédé suivant au moins l'une des revendications 1 à 6, caractérisé en ce que des amines sont utilisées comme base organique.

8. Procédé suivant la revendication 7, caractérisé en ce que l'hydroxyde de tétraméthylammonium $(CH_3)N\text{-}OH$ est utilisé comme base organique.

9. Procédé suivant au moins l'une des revendications 1 à 8, caractérisé en ce qu'une partie des composés de métaux alcalino-terreux est remplacée par un composé hydrosoluble du plomb.

10. Procédé suivant la revendication 9, caractérisé en ce que jusqu'à 80 moles % du métal alcalino-terreux sont remplacées par du plomb.

FIG.1

FIG.2

FIG.3

$Ba(Ti_{0,8}Zr_{0,2})0_3$

$2\theta(°)$

FIG.4

$(Ba_{0,8}Sr_{0,2})TiO_3$

$2\theta(°)$

FIG.5

$BaTiO_3$

$2\theta(°)$

2-II-PHD 87-155

9